# EUROPÄISCHE PATENTANMELDUNG

(11) **EP 3 974 662 A1**
(43) Veröffentlichungstag der Anmeldung: **30.03.2022**
(21) Anmeldenummer: 21176605.0
(22) Anmeldetag: 28.05.2021
(51) Int. Cl.: F16B 9/00, E04H 6/42

(54) **BEFESTIGUNGSKONSOLE, VORRICHTUNG ZUR FLÄCHENBEGRENZUNG**

(30) Priorität: 25.09.2020 DE 202020105494 U; 20.10.2020 DE 202020105989 U
(71) Anmelder: Lang's Lights s.A., 6830 Berbourg (LU)
(72) Erfinder: Lang, Armand, 6557 Dickweiler (LU)
(74) Vertreter: Kietzmann, Lutz

(57) **Zusammenfassung**

Die Erfindung betrifft eine Befestigungskonsole (1) für ein Rohrstück (2), insbesondere für eine ein Rohrstück (2) umfassende Vorrichtung (10) zur Flächenbegrenzung, wobei die Befestigungskonsole (1) als Winkel ausgeführt ist, der einen ersten Schenkel (3) mit einer Aufstandsfläche (4) und einen winklig, insbesondere rechtwinklig, zum ersten Schenkel (3) angeordneten zweiten Schenkel (5) mit einer Öffnung (6) zur Aufnahme des Rohrstücks (2) aufweist, wobei die Öffnung (6) in zumindest einem Bereich durch eine Lasche (7) begrenzt wird, die winklig, insbesondere rechtwinklig, zum zweiten Schenkel (5) angeordnet ist.

Die Erfindung betrifft ferner eine Vorrichtung (10) zur Flächenbegrenzung mit einer erfindungsgemäßen Befestigungskonsole (1).

## Beschreibung

Die Erfindung betrifft eine Befestigungskonsole für ein Rohrstück, insbesondere zur Herstellung einer Vorrichtung zur Flächenbegrenzung. Darüber hinaus betrifft die Erfindung eine Vorrichtung zur Flächenbegrenzung mit einer erfindungsgemäßen Befestigungskonsole.

### Stand der Technik

Vorrichtungen zur Flächenbegrenzung werden insbesondere auf Parkplätzen eingesetzt, beispielsweise um die Länge eines Stellplatzes zu begrenzen und/oder als Schrammbord. Zur Herstellung einer derartigen Vorrichtung kann mit Hilfe der vorgeschlagenen Befestigungskonsole mindestens ein Rohrstück in einem vorgebbaren Abstand an einem Untergrund, beispielsweise an einer Wandfläche oder an einer Bodenfläche, befestigt werden.

Das zu befestigende Rohrstück kann insbesondere ein Metallrohr, beispielsweise ein Stahl- oder Edelstahlrohr, sein, da ein derartiges Rohrstück eine hohe Festigkeit aufweist und somit besonders robust ist. Der Querschnittsform des Rohrstücks ist zur Optimierung der Robustheit vorzugsweise kreisrund. Das zu befestigende Rohrstück kann jedoch auch eine beliebige, von der Kreisform abweichende Querschnittsform aufweisen.

Die Robustheit des Rohrstücks allein reicht in der Regel nicht aus, um eine Beschädigung einer Vorrichtung zur Flächenbegrenzung im Anwendungsfall zu verhindern. Auch die Befestigung des Rohrstücks am jeweiligen Untergrund muss einem Aufprall durch ein auffahrendes Fahrzeug standhalten können. Die gleichen Anforderungen, die hinsichtlich der Festigkeit bzw. Robustheit an das Rohrstück gestellt werden, gelten somit auch für die Befestigung.

Der vorliegenden Erfindung liegt daher die Aufgabe zugrunde, eine Vorrichtung zur Befestigung eines Rohrstücks anzugeben, die besonders robust ist und zudem einfach und kostengünstig herstellbar ist.

Zur Lösung der Aufgabe wird die Befestigungskonsole mit den Merkmalen des Schutzanspruchs 1 vorgeschlagen. Vorteilhafte Weiterbildungen der Erfindung sind den abhängigen Schutzansprüchen zu entnehmen. Darüber hinaus wird eine Vorrichtung zur Flächenbegrenzung mit einer erfindungsmäßen Befestigungskonsole angegeben.

Die Anwendung der vorgeschlagenen Befestigungskonsole ist dabei nicht auf eine Vorrichtung zur Flächenbegrenzung beschränkt. Weitere Anwendungsmöglichkeiten ergeben sich überall dort, wo es ein Rohrstück oder einen Gegenstand, wie beispielsweise ein Verkehrsschild, an einem Rohrstück zu befestigen gilt.

### Offenbarung der Erfindung

Die für ein Rohrstück, insbesondere für eine ein Rohrstück umfassende Vorrichtung zur Flächenbegrenzung, vorgeschlagene Befestigungskonsole ist als Winkel ausgeführt, der einen ersten Schenkel mit einer Aufstandsfläche und einen winklig, insbesondere rechtwinklig, zum ersten Schenkel angeordneten zweiten Schenkel mit einer Öffnung zur Aufnahme des Rohrstücks aufweist. Die Öffnung wird dabei in zumindest einem Bereich durch eine Lasche begrenzt, die winklig, insbesondere rechtwinklig, zum zweiten Schenkel angeordnet ist.

Die Ausführung als Winkel verstärkt die Befestigungskonsole. Zugleich wird eine Aufstandsfläche geschaffen, über welche sich die Befestigungskonsole am jeweiligen Untergrund abstützen kann. Die Öffnung zur Aufnahme des Rohrstücks ist vorzugsweise in Umfangsrichtung geschlossen ausgeführt, so dass der die Öffnung ausbildende zweite Schenkel trotz Öffnung eine hohe Formsteifigkeit aufweist. Ein in der Öffnung aufgenommenes Rohrstück ist auf diese Weise zudem verliersicher gehalten. Die an die Öffnung angrenzende Lasche kann zur Abstützung und/oder Lagefixierung des in der Öffnung aufgenommenen Rohrstücks eingesetzt werden, so dass die Robustheit der Anordnung weiter steigt.

Die vorgeschlagene Befestigungskonsole kann aus einem Platten- oder Blechmaterial ausgestanzt bzw. ausgeschnitten und derart gekantet und/oder gebogen werden, dass die beiden Schenkel und die Lasche ausgebildet werden. Die Befestigungskonsole ist somit einfach und kostengünstig herstellbar.

Darüber hinaus kann die Lasche als separates Bauteil ausgeführt sein, das separat hergestellt und nachträglich mit der Befestigungskonsole verbunden wird. Zur Herstellung der Lasche kann ebenfalls ein Platten- oder Blechmaterial verwendet werden, aus dem die Lasche ausgestanzt oder ausgeschnitten wird. Ein Kanten oder Biegen des Platten- oder Blechmaterials zur Herstellung der Lasche ist nicht erforderlich, da die Lasche bevorzugt eben ausgeführt ist.

Die separat ausgeführte Lasche ist vorzugsweise in eine Ausnehmung des zweiten Schenkels der Befestigungskonsole eingesetzt, die unmittelbar an die Öffnung zur Aufnahme des Rohrstücks angrenzt. Die Öffnung zur Aufnahme des Rohrstücks wird somit auch durch die separat ausgeführte Lasche begrenzt.

Vorteilhafterweise begrenzt die Lasche die Öffnung zur Aufnahme des Rohrstücks in einem unteren Bereich, so dass die Lasche unter dem Rohrstück zu liegen kommt. Das Rohrstück wird dann über die Lasche abgestützt. Zudem ist die Lasche in der Draufsicht von oben nicht sichtbar.

Gemäß einer bevorzugten Ausführungsform der Erfindung weist die Lasche eine Öffnung zur Aufnahme eines Befestigungsmittels, insbesondere einer Schraube, auf. Mit Hilfe des Befestigungsmittels kann die Lage des Rohrstücks in Bezug auf die Befestigungskonsole fixiert werden. Bei der Schraube kann es sich insbesondere um eine Madenschraube handeln, die in die Öffnung der Lasche einsetzbar, insbesondere einschraubbar, ist. Die Öffnung der Lasche ist hierzu mit einem Innengewinde versehen. Die Madenschraube wird durch Einschrauben zur Anlage an einer Außenwandfläche des Rohrstücks gebracht. Vorzugsweise gräbt sich dabei die Madenschraube in das Material des Rohrstücks ein. Idealerweise ist daher die Madenschraube selbstschneidend ausgeführt.

Zur Fixierung des Rohrstücks kann die Lasche auch mehr als nur eine Öffnung zur Aufnahme eines Befestigungsmittels, insbesondere einer Schraube, aufweisen. Dies ist insbesondere von Vorteil, wenn die Lasche zu beiden Seiten des aufrecht stehenden Schenkels der Befestigungskonsole übersteht. Bei einer nur einseitig überstehenden Lasche, die zudem einteilig mit der Befestigungskonsole ausgebildet ist, sollte eine einzige Öffnung zur Aufnahme eines Befestigungsmittels ausreichen.

Ferner bevorzugt weist der erste Schenkel der Befestigungskonsole mindestens eine Öffnung zur Aufnahme eines Befestigungsmittels, insbesondere einer Schraube, auf. Die Befestigungskonsole kann mit Hilfe des Befestigungsmittels am jeweiligen Untergrund befestigt werden, so dass die Lage der Befestigungskonsole in Bezug auf den Untergrund gesichert ist. Das Befestigungsmittel kann insbesondere eine Schraube bzw. ein Schraubbolzen sein, so dass die Befestigung bei Bedarf lösbar ist.

Die der Abstützung und/oder Lagefixierung des Rohrstücks dienende Lasche verläuft vorzugsweise parallel zum ersten Schenkel. Das heißt, dass die Lasche parallel zur Aufstandsfläche des ersten Schenkels verläuft. Ist sie zudem am tiefsten Punkt der Öffnung zur Aufnahme des Rohrstücks angeordnet, kommt sie unterhalb des Rohrstücks zu liegen, so dass das Rohrstück über die Lasche abgestützt wird.

Weiterhin vorzugsweise sind die Lasche und der erste Schenkel auf unterschiedlichen Seiten in Bezug auf den zweiten Schenkel angeordnet. Auf diese Weise kann ein maximaler Freiraum zur Befestigung der Lasche am Rohrstück und/oder zur Befestigung des ersten Schenkels am Untergrund zur Verfügung gestellt werden.

Sofern die Lasche als separates Bauteil ausgeführt ist, wird sie bevorzugt derart mit der Befestigungskonsole verbunden, dass sie auf beiden Seiten des zweiten Schenkels übersteht, wobei vorzugsweise die jeweils überstehenden Abschnitte der Lasche gleich ausgebildet sind. Die Lasche ist demnach bevorzugt spiegelsymmetrisch ausgeführt. Die Einbaulage der Lasche ist demnach beliebig, was die Montage der Befestigungskonsole vereinfacht.

Bevorzugt weist die Lasche in der Draufsicht eine, vorzugsweise mittig angeordnete und/oder symmetrisch ausgebildete, Einschnürung auf, so dass die Lasche beidseits jeweils eine Aufnahmenut ausbildet. Die Breite der Einschnürung bzw. der beiden Aufnahmenuten in der Draufsicht auf die Lasche ist vorzugsweise an die Materialstärke des zweiten Schenkels der Befestigungskonsole angepasst, so dass die Lasche im Bereich der Einschnürung den zweiten Schenkel der Befestigungskonsole aufnehmen kann. Auf diese Weise wird eine zusätzliche Abstützung der Lasche am zweiten Schenkel der Befestigungskonsole erreicht.

Ferner bevorzugt weist die Öffnung des zweiten Schenkels zur Aufnahme des Rohrstücks eine Innenkontur auf, die im Wesentlichen an eine Außenkontur des Rohrstücks angepasst ist. Das heißt, dass bei Verwendung eines Rohrstücks mit einem kreisrunden Querschnitt die Öffnung im Wesentlichen eine kreisrunde Innenkontur aufweist. Das Rohrstück ist somit in der Öffnung sicher gehalten.

Da die Öffnung zur Aufnahme des Rohrstücks in zumindest einem Bereich durch die Lasche begrenzt wird und die Lasche vorzugsweise eben ausgeführt und/oder tangential in Bezug auf die Öffnung ausgerichtet ist, kann zumindest in diesem Bereich die Innenkontur der Öffnung von der Außenkontur des Rohrstücks abweichen.

In Weiterbildung der Erfindung wird vorgeschlagen, dass der zweite Schenkel eine variierende Breite aufweist, die in Richtung des ersten Schenkels zunimmt. Da die Beanspruchung des zweiten Schenkels im Bereich des ersten Schenkels, das heißt im Bereich des Fußpunkts, am größten ist, kann über die größere Breite des zweiten Schenkels in diesem Bereich die Stabilität der Befestigungskonsole weiter verbessert werden. Schließt hieran der erste Schenkel in gleicher Breite an, vergrößert sich die Aufstandsfläche, so dass die Befestigungskonsole optimal gegen Verkippen gesichert ist.

Des Weiteren wird vorgeschlagen, dass der zweite Schenkel an seinem freien Ende eine gerundete Außenkontur aufweist. Die gerundete Außenkontur verringert die Verletzungsgefahr an der Befestigungskonsole. Vorzugsweise verläuft die gerundete Außenkontur konzentrisch zur Innenkontur der Öffnung zur Aufnahme des Rohrstücks. Das heißt, dass die Öffnung zumindest bereichsweise, insbesondere über einen Winkelbereich < 180° von einem Steg eingefasst wird, der über diesen Winkelbereich eine gleichbleibende Breite aufweist. Der Steg minimiert den Bereich, der später über das Rohrstück hinaussteht.

In einer vorteilhaften Ausgestaltung der Erfindung ist die Befestigungskonsole, vorzugsweise in einem Stück, aus einer Metallplatte oder einem Metallblech, insbesondere einer Stahl- oder Edelstahlplatte oder einem Stahl- oder Edelstahlblech, hergestellt. Die Herstellung aus einer Metallplatte oder einem Metallblech ermöglicht eine besonders robuste Ausführung der Befestigungskonsole, da Metall, insbesondere Stahl oder Edelstahl, eine hohe Festigkeit besitzt. Edelstahl besitzt gegenüber Stahl den Vorteil, dass er nicht korrodiert und daher keinen Korrosionsschutz benötigt. Dies gilt insbesondere, wenn die Befestigungskonsole im Außenbereich montiert werden soll.

Bei Verwendung einer Metallplatte oder eines Metallblechs kann die Befestigungskonsole in einem Stück aus der Platte bzw. dem Blech ausgestanzt bzw. ausgeschnitten werden, beispielsweise mittels Laserschneiden. Anschließend wird das eine Stück gekantet und/oder gebogen, um die beiden winklig zueinander angeordneten Schenkel sowie die Lasche auszubilden. Die einstückige Ausbildung senkt den Herstellungsaufwand und damit die Kosten.

Alternativ zur einstückigen Ausbildung kann zumindest die Lasche als separates Bauteil hergestellt und nachträglich mit der Befestigungskonsole verbunden werden. Die Lasche kann dann in der Weise mit der Befestigungskonsole verbunden werden, dass sie in Bezug auf den zweiten Schenkel beidseitig übersteht.

Sofern mehrere in Umfangsrichtung um die Öffnung verteilt angeordnete Laschen vorgesehen sind, können diese jeweils als separates Bauteil hergestellt und mit der Befestigungskonsole verbunden werden. Die Laschen können dann in großer Zahl hergestellt und vorgehalten werden, so dass die Herstellungskosten sinken.

Alternativ oder ergänzend kann der zweite Schenkel der Befestigungskonsole ein die Öffnung begrenzendes erstes Teil und ein die Öffnung begrenzendes zweites Teil aufweisen. In diesem Fall ist zumindest der zweite Schenkel mehrteilig ausgeführt. Die beiden die Öffnung begrenzenden Teile des zweiten Schenkels ermöglichen ein Öffnen der Öffnung, beispielsweise, um das Rohrstück einzulegen. Ferner können die beiden Teile - ähnlich einer Rohrschelle - um ein Rohrstück gelegt und anschließend verbunden werden. Die beiden Teile sind hierzu bevorzugt lösbar und/oder gelenkig miteinander verbunden, vorzugsweise verschraubt. Beispielsweise können die beiden Teile jeweils eine im Wesentlichen halbkreisförmige Ausnehmung zur Ausbildung der Öffnung aufweisen und zunächst lediglich einseitig miteinander verbunden, vorzugsweise verschraubt, sein, so dass sie relativ zueinander verschwenkbar sind. Die Längsachse der Schraube bildet in diesem Fall bevorzugt die Schwenkachse aus. Nachdem die beiden Teile um das Rohrstück gelegt worden sind, können ihre freien Enden durch erneutes Verschwenken in Überdeckung gebracht und ebenfalls miteinander verbunden, vorzugsweise verschraubt, werden.

Die mehrteilige Ausführung des zweiten Schenkels erweist sich insbesondere als Vorteil, wenn die Befestigungskonsole zur Befestigung eines Gegenstands, beispielsweise eines Verkehrsschilds, an einem Rohrstück eingesetzt werden soll. Denn dann kann die Befestigungskonsole an einer beliebigen Stelle um das Rohrstück gelegt werden bzw. das Rohrstück muss nicht in die Öffnung eingefädelt werden.

Darüber hinaus wird eine Vorrichtung zur Flächenbegrenzung mit einer erfindungsgemäßen Befestigungskonsole und einem Rohrstück vorgeschlagen, das abschnittsweise in der Öffnung des zweiten Schenkels der Befestigungskonsole aufgenommen ist. Mit Hilfe der erfindungsgemäßen Befestigungskonsole kann das Rohrstück an einem Untergrund, beispielsweise an einer Wand- oder Bodenfläche, befestigt werden. Die Befestigung des Rohrstücks mit Hilfe der erfindungsgemäßen Befestigungskonsole ist besonders robust, so dass die Vorrichtung insbesondere als Stellplatzbegrenzung oder als Schrammbord einsetzbar ist. Die Vorrichtung kann auch der Begrenzung einer Verkehrsfläche gegenüber einer bepflanzten Fläche dienen, beispielsweise als Baumschutz.

Bevorzugt weist die Vorrichtung mindestens zwei erfindungsgemäße Befestigungskonsolen zur Befestigung eines Rohrstücks auf. Bei mehreren Rohrstücken vervielfacht sich die Anzahl der Befestigungskonsolen entsprechend.

Die Befestigungskonsolen werden vorzugsweise über die Gesamtlänge der Vorrichtung gleichmäßig verteilt angeordnet, so dass die Last gleichmäßig auf alle Befestigungskonsolen verteilt wird. Im Bereich eines Endabschnitts eines Rohrstücks ist vorzugsweise die Befestigungskonsole nach innen versetzt angeordnet. Auf diese Weise wird ein günstiger Kraftverlauf erzielt, der die Belastung des Rohrstücks senkt.

Als weiterbildende Maßnahme wird vorgeschlagen, dass das Rohrstück endseitig durch ein Deckelteil verschlossen ist, das zwei flach aufeinanderliegende und miteinander verbundene, insbesondere verschraubte, Platten umfasst, wobei die erste Platte im Rohrstück aufgenommen ist und die zweite Platte außenliegend angeordnet ist. Die außenliegende Platte schließt vorzugsweise flächenbündig mit dem Rohrstück ab, so dass sie über das Rohrstück nicht übersteht. Die im Rohrstück aufgenommene Platte weist vorzugsweise eine Außenkontur auf, die an die Innenkontur des Rohrstücks angepasst ist. Das Rohrstück wird auf diese Weise durch die innenliegende Platte ausgesteift. Bevorzugt ist die innenliegende Platte des Deckelteils in das Rohrstück eingepresst, so dass sie durch den Kraftschluss sicher im Rohrstück gehalten ist.

Des Weiteren wird vorgeschlagen, dass das Rohrstück zur Verlängerung der Vorrichtung mit einem weiteren Rohrstück verbunden ist und die Verbindung über ein Anschlussteil hergestellt ist, das drei flach aufeinanderliegende und miteinander verbundene, insbesondere verschraubte, Platten umfasst. Die beiden außenliegenden Platten sind dabei jeweils in einem Rohrstück aufgenommen und die mittlere Platte ist zwischen den beiden Rohrstücken angeordnet. Die mittlere Platte schließt vorzugsweise flächenbündig mit den beiden angrenzenden Rohrstücken ab, so dass sie nicht über die Rohrstücke übersteht. Die jeweils in einem Rohrstück aufgenommenen Platten weisen bevorzugt jeweils eine Außenkontur auf, die an die Innenkontur des jeweiligen Rohrstücks angepasst ist, so dass die Endabschnitte der Rohrstücke hierüber ausgesteift werden. Bevorzugt sind die innenliegenden Platte des Anschlussteils jeweils in die Rohrstücke eingepresst, so dass sie durch den Kraftschluss sicher in den Rohrstücken gehalten sind.

Bevorzugte Ausführungsformen der Erfindung werden nachfolgend anhand der beigefügten Zeichnungen näher beschrieben. Diese zeigen:
- Fig.1: a) bis c) jeweils eine Seitenansicht bzw. eine Draufsicht auf eine erste erfindungsgemäße Befestigungskonsole,
- Fig. 2: eine Seitenansicht einer Vorrichtung zur Flächenbegrenzung mit mehreren erfindungsgemäßen Befestigungskonsolen,
- Fig. 3: a) bis c) jeweils einen Endabschnitt III der Vorrichtung der Fig. 2, a) in einer Schnittansicht, b) in einem Längsschnitt und c) in einer Seitenansicht eines Deckelteils, das in den Endabschnitt eingesetzt ist,
- Fig. 4: a) bis c) jeweils einen Kopplungsbereich IV der Vorrichtung der Fig. 2, a) in einer Schnittansicht, b) in einem Längsschnitt und c) in einer Seitenansicht eines Anschlussteils, das im Kopplungsbereich zur Verbindung zweier Rohrstücke eingesetzt ist,
- Fig. 5: a) und b) jeweils eine Seitenansicht einer zweiten erfindungsgemäßen Befestigungskonsole,
- Fig. 6: eine perspektivische Darstellung der Befestigungskonsole der Fig. 5,
- Fig. 7: eine perspektivische Darstellung der Lasche der Befestigungskonsole der Fig. 5,
- Fig. 8: a) eine Seitenansicht und b) einen Längsschnitt durch die Befestigungskonsole der Fig. 5 ohne Lasche
- Fig. 9: eine Seitenansicht einer dritten erfindungsgemäßen Befestigungskonsole,
- Fig. 10: eine Draufsicht auf eine vierte erfindungsgemäße Befestigungskonsole,
- Fig. 11: eine Seitenansicht der Befestigungskonsole der Fig. 10,
- Fig. 12: eine perspektivische Darstellung der Befestigungskonsole der Fig. 9 mit Rohrstück,
- Fig. 13: eine perspektivische Darstellung einer fünften erfindungsgemäßen Befestigungskonsole mit Rohrstück und
- Fig. 14: eine perspektivische Darstellung einer sechsten erfindungsgemäßen Befestigungskonsole mit Rohrstück.

### Ausführliche Beschreibung der Zeichnungen

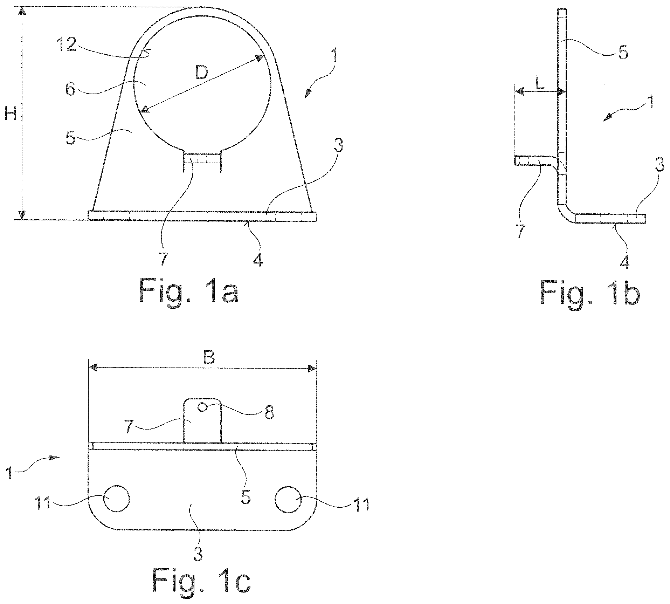

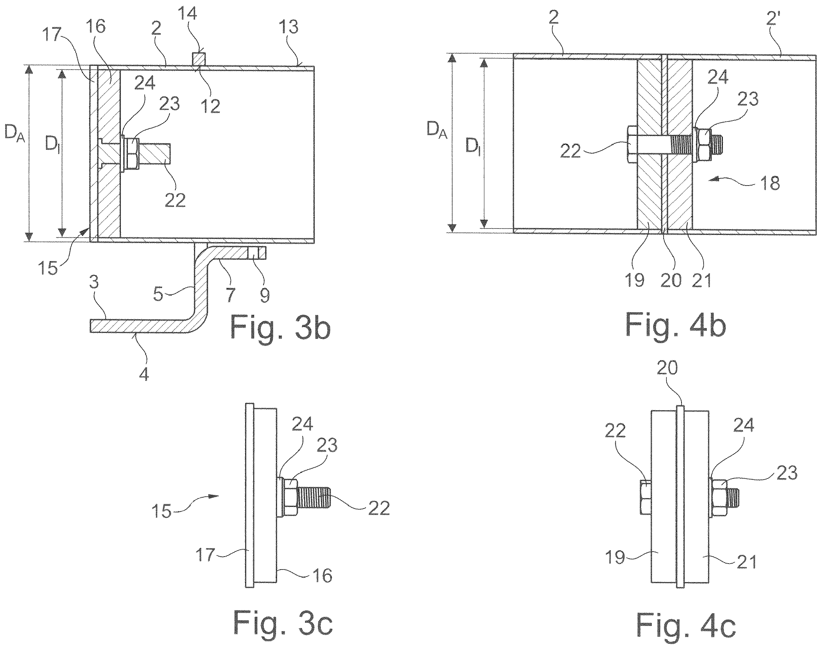

Den Figuren 1a bis 1c sind verschiedene Ansichten einer erfindungsgemäßen Befestigungskonsole 1 für ein Rohrstück 2 zu entnehmen. Die Befestigungskonsole 1 ist als Winkel ausgeführt und weist einen ersten Schenkel 3 mit einer Aufstandsfläche 4 sowie einen zweiten Schenkel 5 mit einer im Wesentlichen kreisrunden Öffnung 6 zur Aufnahme eines Rohrstücks 2 mit einer kreisrunden Querschnittsform auf. Am tiefsten Punkt wird die Öffnung 6 durch eine Lasche 7 zur Abstützung und Lagefixierung des Rohrstücks 2 begrenzt. In der Lasche 7 ist hierzu eine Öffnung 8 zur Aufnahme einer Schraube 9, insbesondere in Form einer Madenschraube, ausgebildet (siehe Figuren 1c und 3b). Um ausreichend Freiraum zum Einschrauben der Madenschraube zu haben, sind die Lasche 7 und der erste Schenkel 3 auf unterschiedlichen Seiten in Bezug auf den zweiten Schenkel 5 angeordnet (siehe Figuren 1b, 1c und 3b).

Mit Ausnahme des durch die Lasche 7 begrenzten Bereichs weist die im zweiten Schenkel 5 ausgebildete Öffnung 6 eine Innenkontur 12 auf, die an eine Außenkontur 13 des Rohrstücks 2 angepasst ist. Der Durchmesser D der Öffnung 6 entspricht demnach im Wesentlichen dem Außendurchmesser D_{A} des Rohrstücks 2 (siehe Figuren 1a und 3b). Das obere Ende des zweiten Schenkels 5 ist zudem gerundet ausgeführt, wobei die Außenkontur 14 in diesem Bereich konzentrisch zur Außenkontur 13 des Rohrstücks 2 verläuft, so dass die Öffnung 6 in diesem Bereich durch einen schmalen Steg begrenzt wird (siehe Fig. 1a). Die Höhe H der Befestigungskonsole 1 entspricht daher annähernd der Höhe des Rohrstücks über dem Untergrund.

Die gerundete Außenkontur 14 des zweiten Schenkels 5 geht in einen Abschnitt über, dessen Breite B in Richtung des ersten Schenkels 3 zunimmt. Im Übergang zum ersten Schenkel 3 ist daher die Breite B am größten. Der erste Schenkel 3 weist eine entsprechende Breite B auf, so dass eine große Aufstandsfläche 4 geschaffen wird (siehe Fig. 1c). Im ersten Schenkel 3 sind zudem zwei Öffnungen 11 zur Aufnahme von Befestigungsmitteln, insbesondere Schrauben, vorgesehen. Mit Hilfe der Befestigungsmittel kann die Befestigungskonsole 1 an einem Untergrund befestigt werden.

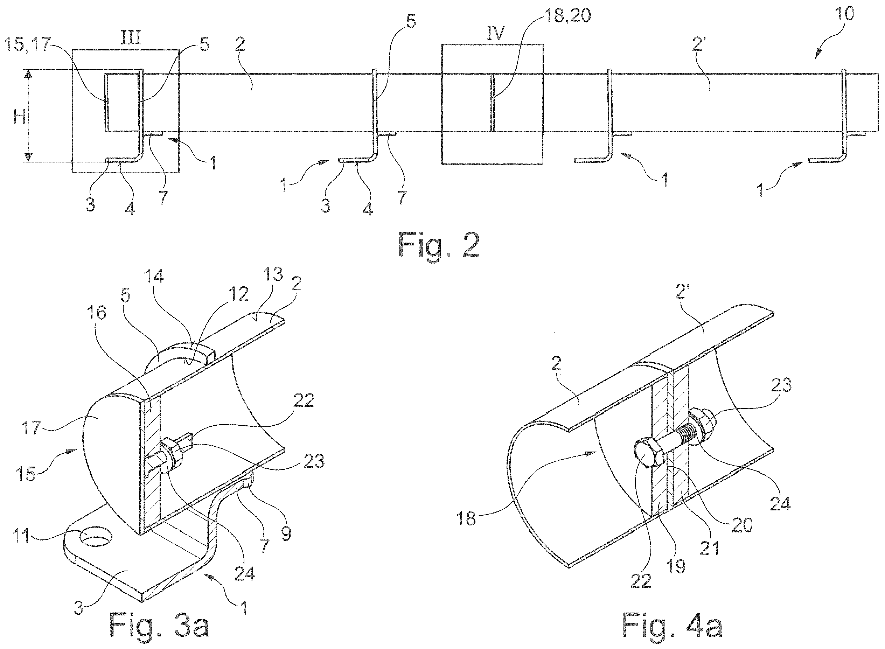

Eine bevorzugte Anwendung der in den Figuren 1 a bis 1c dargestellten erfindungsgemäßen Befestigungskonsole 1 ist in der Fig. 2 dargestellt. Hierbei handelt es sich um eine Vorrichtung 10 zur Flächenbegrenzung. Derartige Vorrichtungen 10 finden beispielsweise auf Parkplätzen Einsatz.

Die in der Fig. 2 dargestellte Vorrichtung 10 zur Flächenbegrenzung weist zwei Rohrstücke 2, 2' sowie vier Befestigungskonsolen 1 zur Befestigung der beiden Rohrstücke 2, 2' auf. Die Befestigungskonsolen 1 sind über die Länge der beiden Rohrstücke 2, 2' gleichmäßig verteilt angeordnet. Im Bereich der beiden Enden sind die außenliegenden Befestigungskonsolen 1 jeweils eingerückt (siehe Endabschnitt III). Das Rohrstück 2 ist endseitig durch ein Deckelteil 15 geschlossen, das nachfolgend anhand der Figuren 3a bis 3c näher erläutert wird. Die Kopplung der beiden Rohrstücke 2, 2' wird vorliegend mit Hilfe eines Anschlussteils 18 bewirkt (siehe Kopplungsbereich IV), das nachfolgend anhand der Figuren 4a bis 4c näher erläutert wird.

Das Deckelteil 15 weist zwei flach aufeinanderliegende Platten 16, 17 auf., die miteinander verschraubt sind. Die Platte 16 ist in das Rohrstück 2 eingepresst, so dass das Deckelteil 15 fest im Rohrstück 2 gehalten ist. Der Durchmesser der Platte 16 ist hierzu mit einem Pressübermaß gegenüber dem Innendurchmesser D_{I} des Rohrstücks 2 versehen. Die Platte 17 liegt außen am Rohrstück 2 an und schließt flächenbündig mit dem Rohrstück 2 ab. Das heißt, dass der Durchmesser der Platte 17 dem Außendurchmesser D_{A} des Rohrstücks 2 entspricht. Die Verschraubung der beiden Platten 16, 17 wird mit Hilfe einer Schraube 22 bewirkt, die andernends mit einer Mutter 23 gekontert ist, wobei zwischen der Mutter 23 und der Platte 16 eine Unterlegscheibe 24 angeordnet ist.

Das im Kopplungsbereich IV angeordnete Anschlussteil 18 weist drei flach aufeinanderliegende Platten 19, 20 und 21 auf, die miteinander verschraubt sind. Die beiden außenliegenden Platten 19, 21 sind jeweils mit einem Pressübermaß gegenüber den Innendurchmessern D_{I} der beiden Rohrstücke 2, 2' versehen, so dass sie über eine Pressverbindung sicher im jeweiligen Rohrstück 2, 2' gehalten sind. Die mittlere Platte 20 weist einen Durchmesser auf, der den Außendurchmessern D_{A} der beiden Rohrstücke 2, 2' entspricht, so dass die Platte 20 flächenbündig mit den Rohrstücken 2, 2' abschließt.

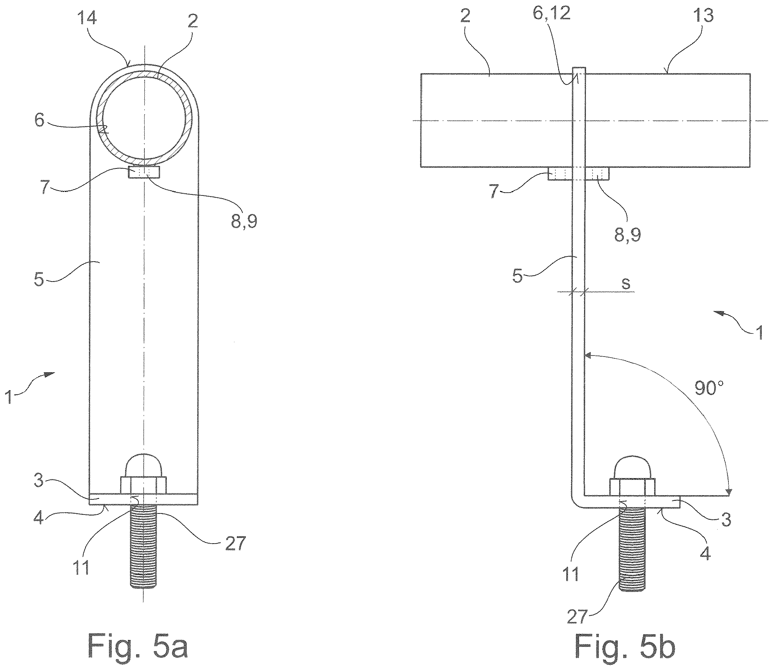

Eine weitere bevorzugte Ausführungsform einer erfindungsgemäßen Befestigungskonsole 1 für ein Rohrstück 2 wird nachfolgend anhand der Figuren 5 bis 8 näher beschrieben. Bei dieser Ausführungsform ist die Lasche 7 als separates Bauteil ausgeführt.

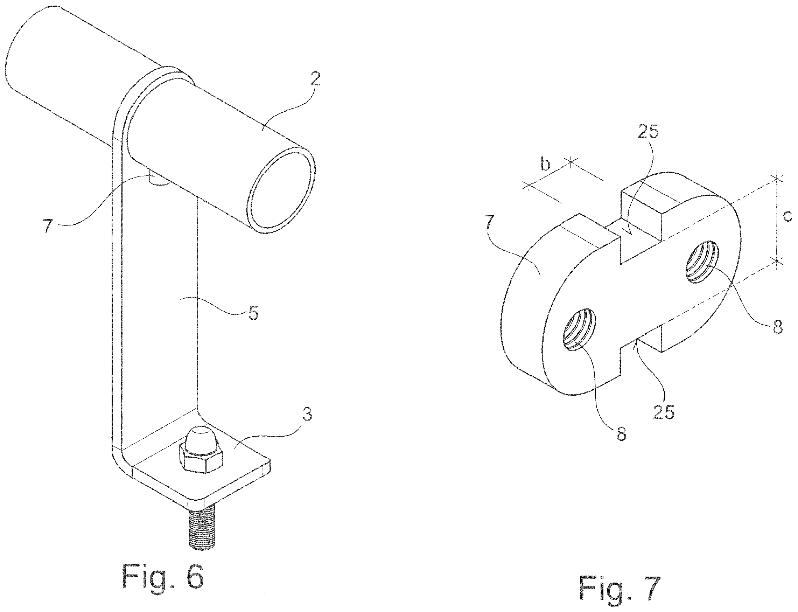

Wie insbesondere der Fig. 7 zu entnehmen ist, ist die Lasche 7 aus einem Platten- oder Blechmaterial hergestellt, beispielsweise ausgestanzt oder ausgeschnitten. An ihren beiden Enden ist sie gerundet. Mittig weist sie eine symmetrische Einschnürung 25 auf, deren Breite b im Wesentlichen der Materialstärke s des Platten- oder Blechmaterials der Befestigungskonsole 1 entspricht (siehe Fig. 5b). Die Mitte der Einschnürung 25 bildet eine Symmetrieachse aus, so dass die Abschnitte diesseits und jenseits der Einschnürung 25 in Bezug auf diese Achse gespiegelt sind. In beiden Abschnitten ist jeweils eine Öffnung 8 zur Aufnahme eines Befestigungsmittels 9 in Forme einer Schraube, beispielsweise einer Madenschraube, ausgebildet. Die Öffnungen 8 sind hierzu jeweils mit einem Innengewinde versehen.

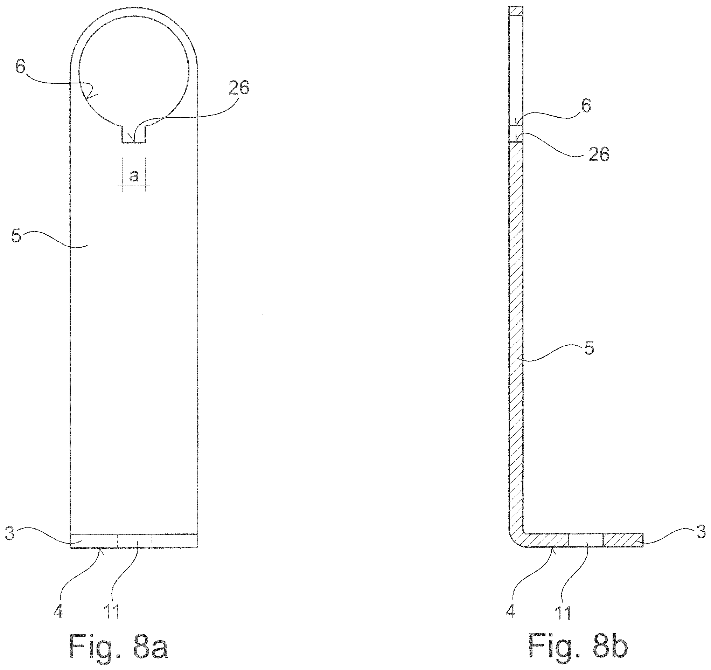

Zur Aufnahme der Lasche 7 weist der zweite Schenkel 5 der Befestigungskonsole 1 eine Ausnehmung 26 auf, welche unmittelbar an die Öffnung 6 zur Aufnahme des Rohrstücks 2 angrenzt, so dass die Ausnehmung 26 die Öffnung 6 erweitert (siehe Figuren 8a und 8b). Die Breite a der Ausnehmung 26 ist an die Breite c der Lasche 7 im Bereich der Einschnürung 25 angepasst (siehe Fig. 7). Die Lasche 7 kann dann zur Verbindung mit der Befestigungskonsole 1 einfach in die Ausnehmung 26 eingesetzt werden. Über die Einschnürung 25 ist die Lasche 7 beidseits am zweiten Schenkel 5 der Befestigungskonsole 1 abgestützt.

Nachdem die Lasche 7 mit der Befestigungskonsole 1 verbunden wurde, kann das Rohrstück 2 in die Öffnung 6 des zweiten Schenkels 5 eingesetzt werden. Das Rohrstück 2 kommt dann auf der Lasche 7 zu liegen, so dass die Lasche 7 über die Einschnürung 25 verliersicher in der Ausnehmung 26 gehalten ist. Über die Befestigungsmittel 9, die in die beiden Öffnungen 8 der Lasche 7 eingesetzt bzw. eingeschraubt werden, kann dann das Rohrstück 2 zusätzlich fixiert werden. Dieser Zustand ist in den Figuren 5a und 5b sowie in der Fig. 7 dargestellt.

Zur Befestigung der Befestigungskonsole 1 an einem Untergrund kann in die Öffnung 11 des ersten Schenkels 3 ein Befestigungsmittel 27, beispielsweise eine Schraube oder ein Schraubbolzen, eingesetzt werden (siehe Figuren 5a und 5b sowie Fig. 7).

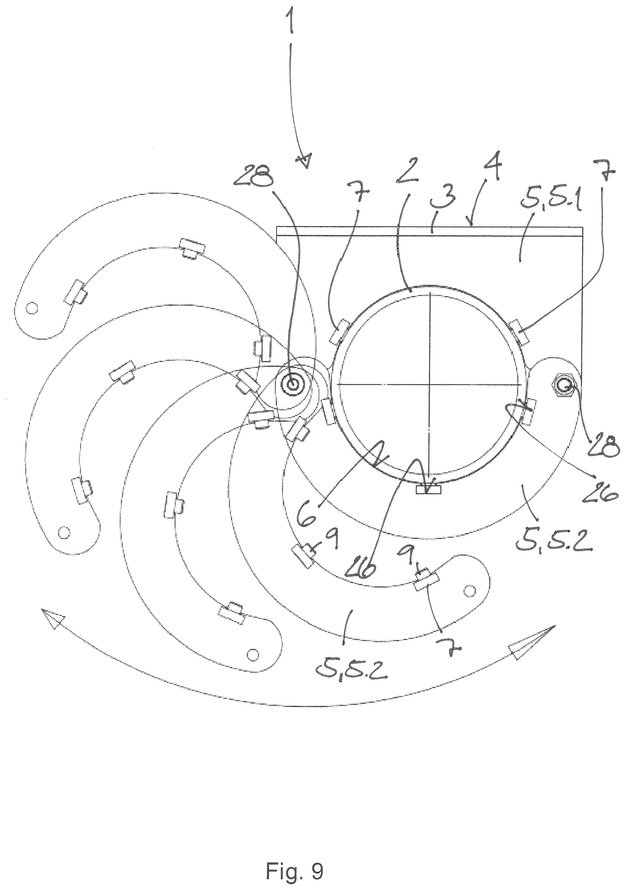

Der Fig. 9 ist eine weitere bevorzugte Ausführungsform einer Befestigungskonsole 1 zu entnehmen. Der zweite Schenkel 5 der Befestigungskonsole 1 ist hier mehrteilig ausgeführt. Die mehreren Teile umfassen ein erstes Teil 5.1 und ein zweites Teil 5.2, die über Befestigungsmittel 28 in Form von Schrauben miteinander verbunden bzw. verschraubt sind. Die mehrteilige Ausführung ermöglicht ein Verschwenken der beiden Teile 5.1, 5.2 relativ zueinander, wobei die Längsachse eines Befestigungsmittels 28 als Schwenkachse dient. Das jeweils andere Befestigungsmittel 28 wird hierzu gelöst. In der Fig. 9 bildet die Längsachse des linken Befestigungsmittels 28 die Schwenkachse aus, während das rechte Befestigungsmittel 28 gelöst ist, so dass das zweite Teil 5.2 gegenüber dem ersten Teil 5.1 des zweiten Schenkels 5 verschwenkbar ist (siehe Pfeil). Das Verschwenken ist zudem durch die verschiedenen Positionen des zweiten Teils 5.2 dargestellt. Durch das Verschwenken kann die Öffnung 6 freigegeben bzw. geöffnet werden, so dass die Befestigungskonsole 1 um ein Rohrstück 2 legbar ist. Anschließend kann das zweite Teil 5.2 zurückgeschwenkt, in Überdeckung mit dem ersten Teil 5.1 gebracht und mit diesem wieder verschraubt werden.

Die beiden Teile 5.1, 5.2 weisen die Öffnung 6 erweiternde Ausnehmungen 26 auf, in denen jeweils eine Lasche 7 eingesetzt ist, die insbesondere analog der in der Fig. 7 dargestellten Lasche 7 ausgebildet sein kann. Die Laschen 7 weisen Schrauben 9 auf, die insbesondere als Madenschrauben ausgebildet sein können und der Fixierung des Rohrstücks 2 innerhalb der Öffnung 6 dienen. Die dargestellte Ausführungsform weist beispielshaft fünf Ausnehmungen 26 auf, die in Umfangsrichtung verteilt angeordnet sind und in die jeweils eine Lasche 7 eingesetzt ist.

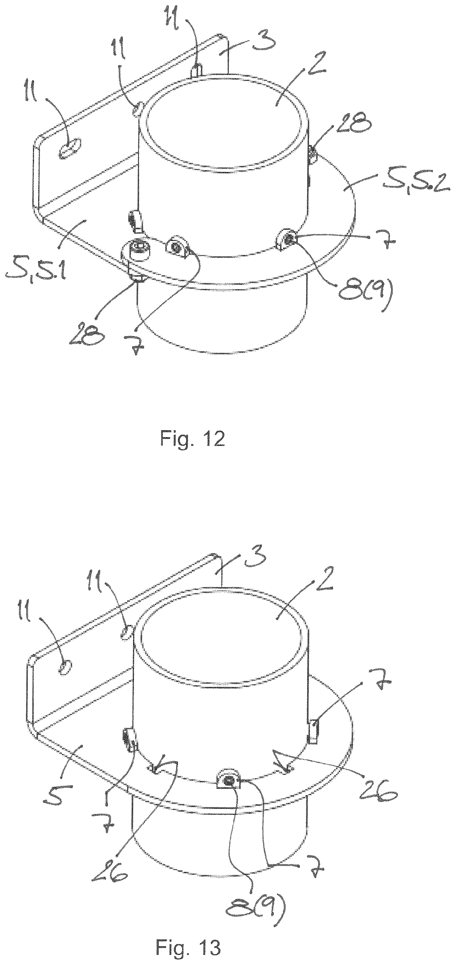

Mit Hilfe der in der Fig. 9 dargestellten Befestigungskonsole 1 kann ein Gegenstand, beispielsweise ein Verkehrsschild, eine Beleuchtungseinrichtung oder eine Überwachungseinrichtung in Form einer Kamera, an einem Rohrstück 2, insbesondere an einem Mast, befestigt werden. Wie beispielhaft in der Figur 12 dargestellt, welche die Befestigungskonsole 1 der Fig. 9 in einer perspektivischen Darstellung zeigt, kann der erste Schenkel 3 der Befestigungskonsole 1 mindestens eine als Bohrung und/oder als Langloch ausgebildete Öffnung 11 zur Aufnahme von Befestigungsmitteln (nicht dargestellt) aufweisen.

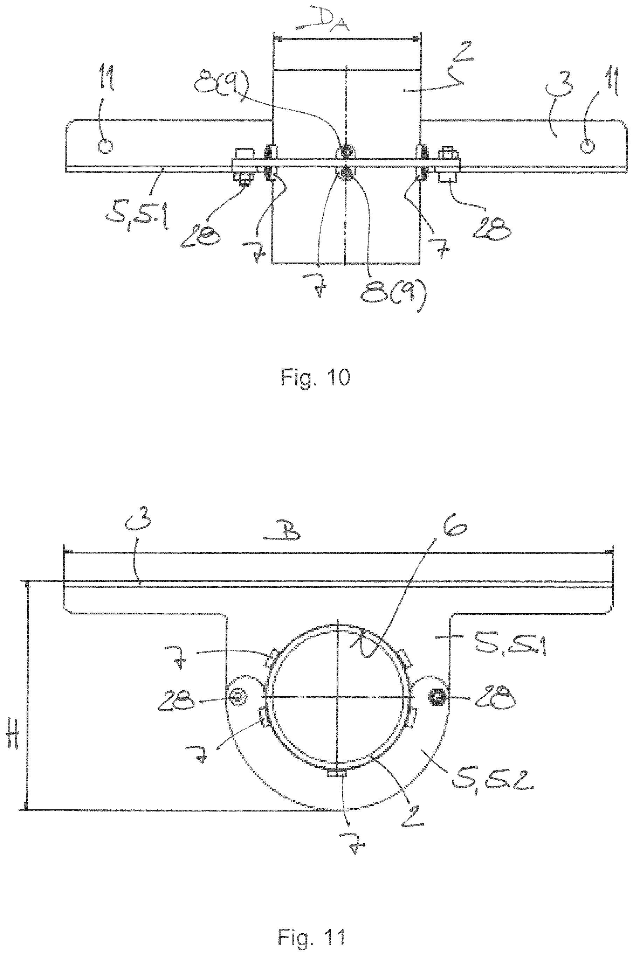

Die Figuren 10 und 11 zeigen eine Abwandlung der Ausführungsform der Fig. 9. Der erste Schenkel 3 ist in dieser Ausführungsform breiter ausgeführt, so dass eine größere Gesamtbreite B erzielt wird (siehe Fig. 11). Die Höhe H bleibt unverändert. Der Fig. 10 ist zu entnehmen, dass die beiden Teile 5.1, 5.2 des zweiten Schenkels 5 abschnittsweise aufeinanderliegen, so dass in diesem Bereich die beiden Teile 5.1, 5.2 miteinander verschraubt werden können. Ferner sind der Fig. 10 die Öffnungen 11 zur Aufnahme von Befestigungsmitteln 27 (nicht dargestellt) zu entnehmen, mit deren Hilfe ein Gegenstand am ersten Schenkel 3 der Befestigungskonsole 1 befestigt werden kann. Der Gegenstand ist dann über die gesamte Breite B am ersten Schenkel 3 abgestützt.

Fig. 13 zeigt eine Ausführungsform mit einem einteilig ausgebildeten zweiten Schenkel 5. Das Rohrstück 2 muss hier in die Öffnung 6 eingefädelt werden, sofern es nicht bereits in die Öffnung 6 eingesetzt ist. Zur Lagefixierung sind über den Umfang des Rohrstücks 2 verteilt angeordnete Laschen 7 mit Öffnungen 8 vorgesehen, in die Schrauben 8, insbesondere Madenschrauben, eingesetzt sind. Da der zweite Schenkel 5 der dargestellten Befestigungskonsole 1 insgesamt sieben Ausnehmungen 26 zur Aufnahme von Laschen 7 aufweist, können bei Bedarf auch mehr als nur die dargestellten vier Laschen 7 eingesetzt werden.

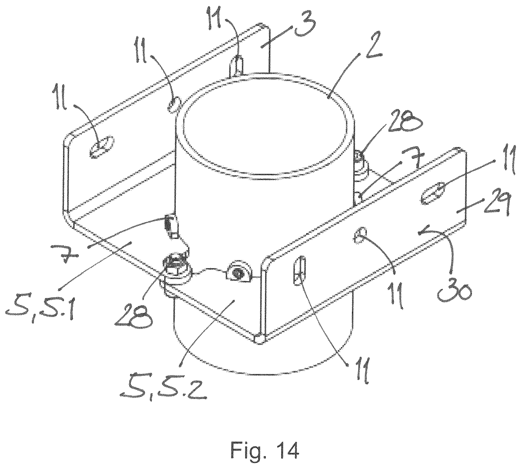

Eine weitere Ausführungsform einer erfindungsgemäßen Befestigungskonsole 1 ist der Fig. 14 zu entnehmen. Hier ist der zweite Schenkel 5 mehrteilig ausgeführt. Das zweite Teil 5.2 des zweiten Schenkels 5 ist zudem mit einem dritten Schenkel 29 verbunden, so dass eine weitere Aufstands- bzw. Anlagefläche 30 mit Öffnungen 11 zur Befestigung eines Gegenstands (nicht dargestellt) geschaffen wird.

### Bezugszeichenliste

1 Befestigungskonsole
2 Rohrstück
3 Schenkel
4 Aufstandsfläche
5 Schenkel
6 Öffnung
7 Lasche
8 Öffnung
9 Schraube
10 Vorrichtung zur Flächenbegrenzung
11 Öffnung
12 Innenkontur
13 Außenkontur
14 Außenkontur
15 Deckelteil
16 Platte
17 Platte
18 Anschlussteil
19 Platte
20 Platte
21 Platte
22 Schraube
23 Mutter
24 Unterlegscheibe
25 Einschnürung
26 Ausnehmung
27 Befestigungsmittel
28 Befestigungsmittel
29 Schenkel
30 Anlagefläche

## Patentansprüche

1. Befestigungskonsole (1) für ein Rohrstück (2), insbesondere für eine ein Rohrstück (2) umfassende Vorrichtung (10) zur Flächenbegrenzung, wobei die Befestigungskonsole (1) als Winkel ausgeführt ist, der einen ersten Schenkel (3) mit einer Aufstandsfläche (4) und einen winklig, insbesondere rechtwinklig, zum ersten Schenkel (3) angeordneten zweiten Schenkel (5) mit einer Öffnung (6) zur Aufnahme des Rohrstücks (2) aufweist, wobei die Öffnung (6) in zumindest einem Bereich durch eine Lasche (7) begrenzt wird, die winklig, insbesondere rechtwinklig, zum zweiten Schenkel (5) angeordnet ist.

2. Befestigungskonsole (1) nach Anspruch 1,
**dadurch gekennzeichnet, dass** die Lasche (7) als separates Bauteil ausgeführt ist und in eine unmittelbar an die Öffnung (6) angrenzende Ausnehmung (26) des zweiten Schenkels (5) eingesetzt ist.

3. Befestigungskonsole (1) nach Anspruch 1 oder 2,
**dadurch gekennzeichnet, dass** die Lasche (7) eine Öffnung (8) zur Aufnahme eines Befestigungsmittels, insbesondere einer Schraube (9), aufweist.

4. Befestigungskonsole (1) nach einem der vorhergehenden Ansprüche,
**dadurch gekennzeichnet, dass** der erste Schenkel (3) mindestens eine Öffnung (11) zur Aufnahme eines Befestigungsmittels (27), insbesondere einer Schraube, aufweist.

5. Befestigungskonsole (1) nach einem der vorhergehenden Ansprüche,
**dadurch gekennzeichnet, dass** die Lasche (7) parallel zum ersten Schenkel (3) verläuft, wobei vorzugsweise die Lasche (7) und der erste Schenkel (3) auf unterschiedlichen Seiten in Bezug auf den zweiten Schenkel (5) angeordnet sind oder die Lasche (7) auf beiden Seiten des zweiten Schenkels (5) übersteht.

6. Befestigungskonsole (1) nach einem der vorhergehenden Ansprüche,
**dadurch gekennzeichnet, dass** die Lasche (7) in der Draufsicht eine, vorzugsweise mittig angeordnete und/oder symmetrisch ausgebildete, Einschnürung (25) aufweist, so dass die Lasche (7) beidseits jeweils eine Aufnahmenut ausbildet.

7. Befestigungskonsole (1) nach einem der vorhergehenden Ansprüche,
**dadurch gekennzeichnet, dass** die Öffnung (6) zur Aufnahme des Rohrstücks (2) eine Innenkontur (12) aufweist, die im Wesentlichen an eine Außenkontur (13) des Rohrstücks (2) angepasst ist.

8. Befestigungskonsole (1) nach einem der vorhergehenden Ansprüche,
**dadurch gekennzeichnet, dass** der zweite Schenkel (5) eine variierende Breite (B) aufweist, die in Richtung des ersten Schenkels (3) zunimmt.

9. Befestigungskonsole (1) nach einem der vorhergehenden Ansprüche,
**dadurch gekennzeichnet, dass** der zweite Schenkel (5) an seinem freien Ende eine gerundete Außenkontur (14) aufweist, die vorzugsweise konzentrisch zur Innenkontur (12) der Öffnung (6) zur Aufnahme des Rohrstücks (2) verläuft.

10. Befestigungskonsole (1) nach einem der vorhergehenden Ansprüche,
**dadurch gekennzeichnet, dass** die Befestigungskonsole (1), vorzugsweise in einem Stück, aus einer Metallplatte oder einem Metallblech, insbesondere einer Stahl- oder Edelstahlplatte oder einem Stahl- oder Edelstahlblech, hergestellt ist.

11. Befestigungskonsole (1) nach einem der vorhergehenden Ansprüche,
**dadurch gekennzeichnet, dass** der zweite Schenkel (5) ein die Öffnung (6) begrenzendes erstes Teil (5.1) und ein die Öffnung (6) begrenzendes zweites Teil (5.2) aufweist, wobei vorzugsweise die beiden Teile (5.1, 5.2) lösbar und/oder gelenkig miteinander verbunden, vorzugsweise verschraubt, sind.

12. Vorrichtung (10) zur Flächenbegrenzung mit einer Befestigungskonsole (1) nach einem der vorhergehenden Ansprüche und einem Rohrstück (2), das abschnittsweise in der Öffnung (6) des zweiten Schenkels (5) der Befestigungskonsole (1) aufgenommen ist.

13. Vorrichtung (10) nach Anspruch 12,
**dadurch gekennzeichnet, dass** das Rohrstück (2) endseitig durch ein Deckelteil (15) verschlossen ist, das zwei flach aufeinanderliegende und miteinander verbundene, insbesondere verschraubte, Platten (16, 17) umfasst, wobei die erste Platte (16) im Rohrstück (2) aufgenommen ist und die zweite Platte (17) außenliegend angeordnet ist.

14. Vorrichtung (10) nach Anspruch 12 oder 13,
**dadurch gekennzeichnet, dass** das Rohrstück (2) zur Verlängerung der Vorrichtung (10) mit einem weiteren Rohrstück (2') verbunden ist und die Verbindung über ein Anschlussteil (18) hergestellt ist, das drei flach aufeinanderliegende und miteinander verbundene, insbesondere verschraubte, Platten (19, 20, 21) umfasst, wobei die beiden außenliegenden Platten (19, 21) jeweils in einem Rohrstück (2, 2') aufgenommen sind und die mittlere Platte (20) zwischen den beiden Rohrstücken (2, 2') angeordnet ist.

15. Vorrichtung (10) nach Anspruch 13 oder 14,
**dadurch gekennzeichnet, dass** die Platte (16) in das Rohrstück (2) und/oder die Platten (19, 21) jeweils in die Rohrstücke (2, 2') eingepresst ist bzw. sind.
